Europäisches Patentamt

European Patent Office

Office européen des brevets

(11) Numéro de publication: **0 486 384 B1**

(12) **FASCICULE DE BREVET EUROPEEN**

(45) Date de publication de fascicule du brevet: **18.01.95**
(51) Int. Cl.6: **B01J 20/18**

(21) Numéro de dépôt: **91403041.6**

(22) Date de dépôt: **14.11.91**

(54) **Adsorbants industriels à base de zéolites X à basse teneur en silice pour la séparation non cryogénique des gaz de l'air et leur procédé de préparation.**

(30) Priorité: **16.11.90 FR 9014295**

(43) Date de publication de la demande:
**20.05.92 Bulletin 92/21**

(45) Mention de la délivrance du brevet:
**18.01.95 Bulletin 95/03**

(84) Etats contractants désignés:
**AT BE CH DE DK ES FR GB GR IT LI LU NL SE**

(56) Documents cités:
**EP-A- 0 109 063**
**EP-A- 0 164 024**
**EP-A- 0 196 103**

**ACS SYMPOSIUM SER. 368 - 1988 P. 478-491 COE C. ET ALT."MOLECULARLY ENGINEE-RED, HIGH PERFORMANCE ADSORBENT" P 478 ET P488-491**

(73) Titulaire: **CECA S.A.**
**4 - 8, Cours Michelet**
**La Défense 10**
**F-92800 Puteaux (FR)**

(72) Inventeur: **Plee, Dominique**
**4, rue du Moulin**
**F-78250 Meulan (FR)**

(74) Mandataire: **Haicour, Philippe**
**ELF ATOCHEM S.A., D.P.I.**
**4-8, Cours Michelet**
**La Défense 10 - Cédex 42**
**F-92091 Paris La Défense (FR)**

Rank Xerox (UK) Business Services
(3.10/3.09/3.3.3)

**Description**

La présente invention se rapporte à des adsorbants industriels à base de zéolites X à basse teneur en silice, particulièrement efficaces pour la séparation non cryogénique des gaz de l'air.

La séparation des gaz de l'air à l'aide de faujasite a été envisagée pratiquement depuis que la synthèse de ces zéolites a été rendue possible (notamment travaux de Milton), sans que les faujasites calciques aient révélé sur ce point un intérêt industriel particulier.

On rappelle ici que les faujasites constituent un groupe d'espèces minérales caractérisées par leur structure topographique cristallographique, dont on peut trouver un excellent exposé dans l'ouvrage de Donald W. Breck "Zeolite Molecular Sieves", John Wiley and Sons éditeurs, 1974, p.92 et suivantes. La règle dite de Lowenstein leur impose un Si/Al supérieur, ou tout au moins égal à 1. On a coutume de distinguer:

- les faujasites X avec Si/Al <1,5,
- les faujasites Y avec Si/Al >1,5.

Cependant les faujasites X classiques sont de rapport Si/Al$\geqq$1,2. Les caractéristiques physiques des faujasites (capacité d'échange, adsorption d'azote, etc...) évoluent en fonction du rapport Si/Al, et les méthodes traditionnelles d'obtention des faujasites X échouent dans la préparation des zéolites de rapport Si/Al avoisinant 1. En particulier, à partir d'un milieu purement sodique, on obtient la zéolite NaA, et il est nécessaire d'introduire une certaine quantité d'ions potassium pour synthétiser la structure faujasite. La synthèse de telles zéolites de rapport Si/Al = 1 a été décrite dans le brevet britannique N° 1580928.

Les caractéristiques fonctionnelles visées pour un adsorbant pour séparation non cryogénique des gaz de l'air sont les suivantes:

une forte capacité d'adsorption d'azote,

une forte différence entre la capacité d'adsorption d'azote et la capacité d'adsorption de l'oxygène.

On caractérise les adsorbants industriels pour la séparation des gaz de l'air par leur adsorption d'azote à 25°C sous 1 bar [$C_{N2}$], exprimée en litres (TPN) d'azote adsorbé par kilogramme d'adsorbant, et par le rapport des capacités d'adsorption d'azote et d'oxygène [$\alpha_{N2/O2}$] sous 1 bar, la mesure de ces capacités s'effectuant selon des techniques bien connues de l'homme du métier, dans un appareil à vide opérant soit par gravimétrie, soit par volumétrie après dégazage sous vide.

Les adsorbants jusqu'à présent industriellement accessibles se caractérisent par une capacité d'adsorption d'azote [$C_{N2}$] tout au plus égale à 13 litres/kg et une sélectivité d'adsorption [$\alpha_{N2/O2}$], rapport des capacités respectives d'adsorption d'azote et d'oxygène d'environ 3, ces valeurs étant rapportées à des agglomérés titrant environ 80% de zéolites X, ou le cas échéant à des tamis sans liant à teneur avoisinante en zéolites X.

La demanderesse a maintenant montré que l'on pouvait disposer d'adsorbants industriels très sensiblement améliorés, lesquels sont des agglomérés comportant de 70 à 95% de zéolites et de 5 à 30% d'un liant argileux,

lesdites zéolites étant essentiellement des mélanges de zéolites X et A dont la cristallinité en X est supérieure ou égale à 95 %, et la cristallinité en A est inférieure ou égale à 5 %, l'adsorption de toluène (adsorption standard avec une pression partielle de 0,5 et à une température de 25°C) étant de 23 ± 1 %, et le spectre de rayons X montrant qu'il s'agit d'une faujasite pratiquement pure,

le rapport Si/Al de la composante cristalline étant de 1 ± 0,03,

le produit étant en outre caractérisé par un rapport 2Ca/Al compris entre environ 80 et 99%, l'adsorption d'azote étant comprise entre 16 et 23,5 l/kg et le rapport des capacités d'adsorption d'azote et d'oxygène sous 1 bar étant compris entre 3,5 et 4,5.

De tels adsorbants industriels sont nouveaux. Il y a lieu à ce sujet de distinguer entre les faujasites X comme espèces minéralogiques, lesquelles peuvent pour des raisons d'études être formulées sous différentes formes physiques, et les adsorbants industriels comportant de telles faujasites, qui résultent de procédés de fabrication les délivrant en quantités compatibles avec les besoins des unités de séparation des gaz de l'air. Il est connu que les adsorbants zéolitiques, et plus particulièrement ceux qui sont basés sur des faujasites calciques présentent des caractéristiques qui les éloignent considérablement des espèces minéralogiques qu'elles sont censées comporter. Ces faits ont été signalés, notamment dans les brevets européens EP 164024, 196103 et 109063, qui attribuent aux adsorbants industriels une structure de leur composante zéolitique comportant la majorité de leurs ions Ca dans un état hydraté et/ou hydroxylé.

Cette information est très attrayante, mais les publications correspondantes ne proposent aucune vérification expérimentale de cette hypothèse. Elles ne fournissent d'ailleurs aucune indication générale sur la façon d'atteindre l'état déshydraté/déhydroxylé des ions calciques de la structure, si ce n'est que de limiter l'environnement hydrique de la zéolite en cours d'activation, contraintes qui sont connues des chercheurs et

EP 0 486 384 B1

qui les limitent à l'obtention des faujasites calciques comme simples espèces minéralogiques; elles recommandent pour cela de procéder à une déshydratation soigneuse des zéolites préalablement à leur activation, par exemple selon un programme thermique très particulier des colonnes de chromatographie en phase gazeuse.

La présente invention propose une méthode pour obtenir les adsorbants souhaités, et qui consiste à soumettre le résultat d'échanges sodium/calcium appliqués à des zéolites X de rapport Si/Al égal à 1 ou très voisin de 1 pour atteindre des taux d'échange élevés de 80 à près de 100%, méthodes bien connues de l'homme du métier, et de les activer dans des colonnes dites à lit traversé (ci-après LTC). A cet effet, on réalise un lit homogène de granulés de ladite zéolite sous sa forme hydratée, et on force à travers ce lit un courant de gaz sec non acide et de préférence décarbonaté, dont la vitesse a été rendue uniforme par tout moyen approprié, les zéolites ainsi activées étant ensuite vidangées et conditionnées à l'abri de l'air ambiant.

Dans un mode préféré de l'invention, on réalise l'activation dans un cylindre métallique, fermé en bas par une grille, et que l'on remplit de façon uniforme, suivant les méthodes bien connues de l'homme de l'art pour obtenir des remplissages homogènes, avec le tamis à activer sous forme de granulés. On force un courant de gaz chaud, indifféremment de bas en haut ou de haut en bas. Dans le cas de lits de forte épaisseur montés dans des colonnes à fort diamètre, il y aura lieu d'aménager des distributeurs de gaz pour que dès le début de la colonne, l'écoulement du gaz soit le plus uniforme possible. On peut suivre l'avancement du front thermique par mesure de température, par exemple au moyen de thermocouples placés à différents niveaux. Lorsque la température maximale désirée (c'est-à-dire approximativement la température à laquelle le gaz de balayage a été préchauffé) est atteinte en sortie de lit, on poursuit l'opération pendant encore 5 à 60 minutes pour parfaire la déshydratation de la zéolite, mais surtout pour assurer le durcissement du liant du granulé. Puis on vidange, on refroidit et on conditionne la zéolite à l'abri de l'air ambiant, par exemple sous courant d'azote sec. Le procédé peut être conduit de façon discontinue dans une installation dans le lit traversé est contenu dans une colonne fixe. Il peut également être conduit de façon continue, dans une installation à colonne à lit mobile, dans laquelle les granulés à activer sont introduits en tête d'une colonne verticale, tandis que le gaz chaud d'activation est injecté à la base de la colonne par un dispositif approprié, l'aggloméré activé étant extrait et refroidi jusqu'à une température d'environ 80°C dans une trémie de soutirage automatique et de là immédiatement enfûté.

EXEMPLE 1 : Synthèse d'une zéolite de rapport Si/Al = 1 à partir d'un gel de composition:

4,87 $Na_2O$ - 1,63 $K_2O$ - 2 $SiO_2$ - $Al_2O3$ - 130 $H_2O$.

Après mélange des réactifs : silicate de soude et aluminate sodico-potassique, au moyen d'une turbine, on laisse le gel mûrir à 50°C pendant une vingtaine d'heures et on opère une cristallisation de 4 heures à 100°C sans agitation.

Les cristaux obtenus après filtration et lavage sont identifiés par diffraction des rayons X comme faujasites (c'est-à-dire comme des édifices cubiques constitués par des assemblages de cages sodalites par l'intermédiaire de prismes hexagonaux - cf. Breck, référence citée). L'analyse chimique du solide donne un rapport Si/Al = 1,01 et une capacité d'adsorption standard de toluène à 25°C de 22,5 %.

On opère ensuite un échange au moyen de chlorure de calcium dans les conditions suivantes :
- concentration en zéolite = 135 g/l
- concentration en ions $Ca^{2+}$ = 1,8 M/l
- température = 70 °C
- durée = 1 heure.

L'échange est répété une fois dans les mêmes conditions. Le produit fini possède un taux d'échange de 87 % (à titre indicatif, le rapport Na/K des alcalins résiduels est de 2).

On effectue une agglomération du produit sous forme de filés de 1,6 mm au moyen de 20 % de liant, celui-ci étant choisi parmi la classe des matériaux argileux : kaolin, montmorillonite, attapulgite, etc.

Le produit est ensuite séché; en laboratoire, on procède à des températures inférieures à 100°C, préférentiellement vers 80°C, tandis qu'industriellement, on sèche couramment vers 120°C.

EXEMPLE 2 : caractéristiques d'adsorption de la zéolite selon l'exemple 1

Un adsorbant aggloméré selon l'exemple 1, à l'aide d'un mélange 5O/5O d'attapulgite et de montmorillonite, puis séché vers 80°C, est dégazé sous vide à 350°C pendant une nuit dans un appareil de type balance Mac Bain afin de déterminer ses propriétés d'adsorption d'azote et d'oxygène à 25°C.

3

EP 0 486 384 B1

On trouve une capacité d'adsorption de $N_2$ sous 1 bar de 27,8 mg/g de zéolite, soit 22,2 litres/kg et une capacité d'adsorption d'oxygène de 9 mg/g de zéolite, soit 6,3 litres/kg. Ces caractéristiques sont celles que l'on peut attribuer à une faujasite quasi-théorique, diluée pour les besoins de la manipulation avec 20% d'une matière inerte.

EXEMPLE 3 : comparaison entre le produit de l'exemple 2 et une zéolite X au calcium dont le rapport Si/Al est de 1,25.

Cette zéolite est obtenue dans des conditions d'échange légèrement différentes de celles de l'exemple 1 (concentration en chlorure de calcium plus faible) de façon à obtenir ainsi un taux d'échange de 87 %.

Après dégazage dans les conditions de l'exemple 2, sa capacité d'adsorption de $N_2$, sous 1 bar, est de 22 mg/g de zéolite, soit 17,6 litres/kg et sa capacité d'adsorption d'oxygène, de 7,1 mg/g de zéolite soit 5 litres/kg. Ici encore, il s'agit d'un produit assimilable à une espèce minéralogique diluée par 20% de liant inerte.

EXEMPLE 4

A partir du gel de l'exemple 1 et dans les mêmes conditions de cristallisation, on prépare une zéolite de rapport Si/Al = 1, mais on la soumet ici à trois opérations d'échange calcique avec une solution de $Ca^{2+}$ (1,8 M), ce qui l'amène à un taux d'échange de 96 %. Après agglomération et dégazage sous vide, dans les conditions de l'exemple 2, on obtient un produit dont les capacités d'adsorption d'azote et d'oxygène, sous 1 bar à 25°C, s'établissent respectivement à 29,1 mg/g, soit 23,3 litres/kg et 9,4 mg/g de zéolite, soit 6,6 litres/kg.

EXEMPLE 5: adsorbant industriel zéolitique calcique de rapport Si/Al = 1

On prend 10 kg de l'aggloméré zéolitique selon l'exemple 2 (faujasite calcique échangée à 86%, de rapport Si/Al = 1, contenant 20% de liant d'agglomération). On l'active en lit traversé (LTC) sous air sec et décarbonaté dont la vitesse linéaire, en équivalent de colonne vide, est d'environ 0,3 m/s, la température du gaz étant de 570°C, et la teneur en $CO_2$ étant inférieure à 1 ppm.

Les capacités d'adsorption d'azote et d'oxygène sont mesurées après dégazage sous vide du produit activé LTC. On trouve, sous 1 bar à 25°C, pour $N_2$ et $O_2$ respectivement 22,7 mg/g de zéolite, soit 18,2 litres/kg et 6,8 mg/g zéolite, soit 4,8 litres/kg.

EXEMPLE 6 : essai comparatif avec un adsorbant industriel zéolitique calcique de rapport Si/Al = 1,25

On soumet la zéolite de l'exemple 3, de rapport Si/Al = 1,25 au traitement d'activation de l'exemple 5. Le produit résultant possède, après dégazage sous vide, des capacités d'adsorption, sous 1 bar à 25°C, d'azote et d'oxygène qui sont respectivement, égales à 18,1 mg/g de zéolite, soit 14,5 litres/kg et 5,6 mg/g de zéolite soit 3,9 litres/kg.

EXEMPLE 7 Contre-exemple

On a tenté d'obtenir une zéolite de type faujasite, de rapport Si/Al = 1, et dont le taux d'échange calcique est d'environ 87%, par activation de l'aggloméré correspondant avec 20% de kaolin, dans un four industriel tournant de facture traditionnelle. Le produit obtenu après un temps de séjour dans le four estimé à 60 minutes à 550°C se caractérise par une capacité d'adsorption en azote de 9,4 mg/g, soit 7,5 litres/kg. Ces caractéristiques ne permettent nullement l'assimilation du produit à une faujasite calcique selon l'exemple 2, ni à l'adsorbant industriel selon l'invention de l'exemple 5.

EXEMPLE 8

Comparaison d'agglomérés à base de faujasites calciques à même taux d'échange calcique, mais à Si/Al variant de 1,25 à 1, activées comparativement en four tournant et en four LTC.

4

| RAPPORT Si/Al = 1 | | RAPPORT Si/Al = 1,25 | |
|---|---|---|---|
| Four tournant | Colonne LTC | Four tournant | Colonne LTC |
| 7,5 l /kg | 18,2 l/kg | 6 l/kg | 14,5 l/kg |

**Revendications**

1. Adsorbants industriels pour la séparation non cryogénique des gaz de l'air, comportant de 70 à 95% de zéolites et de 5 à 30% d'un liant argileux, tels qu'on peut les obtenir selon un procédé d'activation consistant à forcer à travers un lit d'agglomérés initialement à température inférieure à 150°C, un courant de gaz sec non acide injecté à une température comprise entre 300 et 700°C, pendant au moins la durée nécessaire à ce que le gaz de sortie atteigne approximativement sa température d'entrée, les adsorbants ainsi activés étant ensuite vidangés et conditionnés à l'abri de l'air ambiant,

    lesdites zéolites étant essentiellement des mélanges de zéolites X et A dont la cristallinité en X est supérieure ou égale à 95 %, et la cristallinité en A est inférieure ou égale à 5 %, l'adsorption standard de toluène étant de 23 ± 1 %, et le spectre de rayons X montrant qu'il s'agit d'une faujasite pratiquement pure,

    le rapport Si/Al de la composante cristalline étant de 1 ± 0,03,

    le produit ayant un rapport 2Ca/Al compris entre environ 0,80 et 0,99,

    son adsorption d'azote étant comprise entre 16 et 23,5 litres/kg,

    le rapport de ses capacités d'adsorption d'azote et d'oxygène sous 1 bar étant compris entre 3,5 et 4,5,

2. Adsorbants agglomérés industriels selon la revendication 1, de rapport 2Ca/Al égal à 0,85, dont la capacité d'adsorption d'azote à 25°C sous 1 bar est de 19 litres/kg ± 1.

3. Adsorbants agglomérés industriels selon la revendication 1, de rapport 2Ca/Al égal à 0,95, dont la capacité d'adsorption d'azote à 25°C sous 1 bar est de 22 litres/kg ± 1.

4. Procédé d'obtention d'adsorbants industriels pour la séparation non cryogénique des gaz de l'air comportant de 70 à 95% de zéolites et de 5 à 30% d'un liant argileux,

    lesdites zéolites étant essentiellement des mélanges de zéolites X et A dont la cristallinité en X est supérieure ou égale à 95 %, et la cristallinité en A est inférieure ou égale à 5 %, l'adsorption standard de toluène étant de 23 ± 1 %, et la structure cristallographique étant celle d'une faujasite pratiquement pure,

    le rapport Si/Al de la composante cristalline étant de 1 ± 0,03,

    le produit ayant un rapport 2Ca/Al compris entre environ 0,80 et 0,99,

    son adsorption d'azote étant comprise entre 16 et 23,5 litres/kg,

    le rapport de ses capacités d'adsorption d'azote et d'oxygène sous 1 bar étant compris entre 3,5 et 4,5, caractérisé en ce que l'on soumet l'aggloméré contenant la zéolite hydratée correspondante à une activation en lit traversé, activation consistant à forcer à travers un lit desdits agglomérés initialement à température inférieure à 150°C, un courant de gaz sec non acide injecté à une température comprise entre 300 et 700°C, pendant au moins la durée nécessaire à ce que le gaz de sortie atteigne approximativement sa température d'entrée, les adsorbants ainsi activés étant ensuite vidangés et conditionnés à l'abri de l'air ambiant.

5. Procédé d'obtention d'adsorbants industriels selon la revendication 4, caractérisé en ce que le lit traversé est un lit fixe.

6. Procédé d'obtention d'adsorbants industriels selon la revendication 4, caractérisé en ce que le lit traversé est un lit mobile.

**7.** Procédé d'obtention d'adsorbants industriels, selon l'une ou l'autre des revendications 4, 5 ou 6, caractérisé en ce que le courant de gaz injecté est un courant de gaz décarbonaté.

## Claims

**1.** Industrial adsorbents for the non-cryogenic separation of gases from air, comprising from 70 to 95% of zeolites and from 5 to 30% of a clayey binder, such that they may be obtained according to an activation process consisting in forcing a stream of dry, non-acidic gas, injected at a temperature between 300 and 700°C, through a bed of agglomerates, initially at a temperature below 150°C, for at least the time required for the outlet gas to reach approximately its inlet temperature, the thus activated adsorbents then being discharged and packaged while sheltered from the surrounding air,

the said zeolites being essentially mixtures of zeolites X and A, the crystallinity in X being greater than or equal to 95% and the crystallinity in A being less than or equal to 5%, the standard toluene adsorption being $23 \pm 1\%$ and the X-ray spectra showing that it is a virtually pure faujasite,

the Si/Al ratio of the crystalline component being $1 \pm 0.03$,

the product having a 2Ca/Al ratio of between approximately 0.80 and 0.99,

its nitrogen adsorption being between 16 and 23.5 litres/kg,

and the ratio of its nitrogen adsorption capacity to its oxygen adsorption capacity at 1 bar being between 3.5 and 4.5.

**2.** Industrial agglomerated adsorbents according to Claim 1, with a 2Ca/Al ratio equal to 0.85, whose nitrogen adsorption capacity at 25°C at 1 bar is 19 litres/kg $\pm$ 1.

**3.** Industrial agglomerated adsorbents according to Claim 1, with a 2Ca/Al ratio equal to 0.95, whose nitrogen adsorption capacity at 25°C at 1 bar is 22 litres/kg $\pm$ 1.

**4.** Process for the production of industrial adsorbents for the non-cryogenic separation of gases from air comprising from 70 to 95% of zeolites and from 5 to 30% of a clayey binder,

the said zeolites being essentially mixtures of zeolites X and A, the crystallinity in X being greater than or equal to 95% and the crystallinity in A being less than or equal to 5%, the standard toluene adsorption being $23 \pm 1\%$ and the crystallographic structure being that of a virtually pure faujasite,

the Si/Al ratio of the crystalline component being $1 \pm 0.03$,

the product having a 2Ca/Al ratio of between approximately 0.80 and 0.99,

its nitrogen adsorption being between 16 and 23.5 litres/kg,

and the ratio of its nitrogen adsorption capacity to its oxygen adsorption capacity at 1 bar being between 3.5 and 4.5,

characterized in that the agglomerate containing the corresponding hydrated zeolite is subjected to an activation in a traversed bed, the activation consisting in forcing a stream of dry, non-acidic gas, injected at a temperature between 300 and 700°C, through a bed of the said agglomerates, initially at a temperature below 150°C, for at least the time required for the outlet gas to reach approximately its inlet temperature, the thus activated adsorbents then being discharged and packaged while sheltered from the surrounding air.

**5.** Process for the production of industrial adsorbents according to Claim 4, characterized in that the traversed bed is a stationary bed.

**6.** Process for the production of industrial adsorbents according to Claim 4, characterized in that the traversed bed is a moving bed.

**7.** Process for the production of industrial adsorbents according to any one of Claims 4, 5 and 6, characterized in that the stream of gas injected is a stream of decarbonated gas.

## Patentansprüche

**1.** Industrielle Adsorptionsmittel für die nicht-kryogene Gastrennung der Luft, enthaltend 70 bis 95 % Zeolithe und 5 bis 30 % eines tonhaltigen Bindemittels, die durch einen Aktivierungsprozeß hergestellt werden können, der darin besteht, einen nicht aciden trockenen Gasstrom durch ein Bett aus Agglomeraten mit einer Anfangstemperatur kleiner 150 °C zu pressen, wobei dieser Gasstrom bei einer Temperatur zwischen 300 und 700 °C solange eingespritzt wird, bis das Gas am Ausgang in etwa die Temperatur erreicht, bei der es eingetreten ist und die so aktivierten Adsorptionsmittel anschließend unter Luftabschluß ausgeleert und konditioniert werden;

die genannten Zeolithe sind im wesentlichen Mischungen aus den Zeolithen X und A, wobei die Kristallinität des Zeoliths X größer oder gleich 95 % und die Kristallinität des Zeoliths A kleiner oder gleich 5 % ist, die Standard-Adsorption von Toluol 23 ± 1 % beträgt und das Röntgenbeugungsspektrum praktisch reinen Faujasit nachweist;

das Si/Al-Verhältnis der kristallinen Komponente beträgt 1 ± 0,03; das Produkt hat ein 2Ca/Al-Verhältnis zwischen ungefähr 0,80 und 0,99; seine Stickstoffadsorption liegt zwischen 16 und 23,5 l/kg;

das Verhältnis der Stickstoff- zur Sauerstoffadsorptionskapazität liegt bei 1 bar zwischen 3,5 und 4,5.

2. Industrielle agglomerierte Adsorptionsmittel nach Anspruch 1 mit einem 2Ca/Al-Verhältnis von 0,85, deren Stickstoffadsorptionskapazität bei 25 °C und 1 bar 19 ± 1 l/kg beträgt.

3. Industrielle agglomerierte Adsorptionsmittel nach Anspruch 1 mit einem 2Ca/Al-Verhältnis von 0,95, deren Stickstoffadsorptionskapazität bei 25 °C und 1 bar 22 ± 1 l/kg beträgt.

4. Verfahren zur Herstellung industrieller Adsorptionsmittel für die nicht-kryogene Gastrennung der Luft, enthaltend 70 bis 95 % Zeolithe und 5 bis 30 % eines tonhaltigen Bindemittels; wobei die genannten Zeolithe im wesentlichen Mischungen aus den Zeolithen X und A sind, bei denen die Kristallinität des Zeoliths X größer oder gleich 95 % und die Kristallinität des Zeoliths A kleiner oder gleich 5 % ist; die Standard-Adsorption von Toluol beträgt 23 ± 1 % und die kristallographische Struktur entspricht der eines praktisch reinen Faujasits; das Si/Al-Verhältnis der kristallinen Komponente beträgt 1 ± 0,03; das Produkt hat ein 2Ca/Al-Verhältnis zwischen ungefähr 0,80 und 0,99; seine Stickstoffadsorption liegt zwischen 16 und 23,5 l/kg;

das Verhältnis der Stickstoff- zur Sauerstoffadsorptionskapazität liegt bei 1 bar zwischen 3,5 und 4,5, dadurch gekennzeichnet, daß man das den entsprechenden hydratisierten Zeolith enthaltende Agglomerat einer Aktivierung in einem Durchgangsbett unterwirft, wobei die Aktivierung aus dem Durchpressen eines nicht aciden trockenen Gasstroms durch ein Bett aus Agglomeraten mit einer Ausgangstemperatur kleiner als 150 °C besteht, dieser Gasstrom bei einer Temperatur zwischen 300 und 700 °C solange eingesprizt wird, bis das Gas am Ausgang ungefähr die Temperatur besitzt, bei der es eintegreten ist und die so aktivierten Absorptionsmittel anschließend unter Luftabschluß ausgeleert und konditioniert werden.

5. Verfahren zur Herstellung industrieller Adsorptionsmittel nach Anspruch 4, dadurch gekennzeichnet, daß das Bett, durch welches der Gasstrom gepreßt wird, ein Festbett ist.

6. Verfahren zur Herstellung industrieller Adsorptionsmittel nach Anspruch 4, dadurch gekennzeichnet, daß das Bett, durch das der Gasstrom gepreßt wird, ein Fließbett ist.

7. Verfahren zur Herstellung industrieller Adsorptionsmittel nach einem oder mehreren der Ansprüche 4, 5 oder 6, dadurch gekennzeichnet, daß der eingespritzte Gasstrom ein decarbonisierter Gasstrom ist.